# EUROPÄISCHE PATENTANMELDUNG

(11) **EP 2 486 792 A1**
(43) Veröffentlichungstag der Anmeldung: **15.08.2012**
(21) Anmeldenummer: 11154241.1
(22) Anmeldetag: 11.02.2011
(51) Int. Cl.: A01K 85/00, A01K 91/06

(54) **Künstlicher Zusatzangelköder**

(71) Anmelder: Dapoz, Volker, 15324 Letschin (DE)
(72) Erfinder: Dapoz, Volker, 15324 Letschin (DE)
(74) Vertreter: Bittner, Thomas L.

(57) **Zusammenfassung**

Die Erfindung betrifft einen künstlichen Zusatzangelköder, der als Beifänger ausgeführt ist, mit Haken (1,2), einem Trägerelement (6) aus einem flexiblen Material und einer Befestigungseinrichtung, welche mit dem Trägerelement (6) in einer zugfesten Verbindung steht, wobei die Haken (1,2) an dem Trägerelement (6) in Längsrichtung zueinander versetzt angeordnet und befestigt sind.

## Beschreibung

Die Erfindung bezieht sich auf einen künstlichen Zusatzangelköder, der als Beifänger ausgeführt ist.

### Hintergrund der Erfindung

Beifänger sind Angelköder, deren Hauptmerkmal darin besteht, als Köder nie ausschließlich eingesetzt zu werden. In der Regel verfügen sie nicht über das notwendige Eigengewicht. Beifänger werden daher mit einer Primärbeschwerung eingesetzt, die zum Beifänger in der Regel auch eine gewisse Beabstandung aufweist. Gewöhnlich werden Beifänger auch als Nebenanbißstellen eingesetzt, das heißt es wird ein Hauptköder mit ausreichender Beschwerung und zusätzlich der oder die Beifänger als zusätzliche Anbißstellen verwendet. Beifänger gibt es in unterschiedlichsten Ausführungen aus Kunststoffen, Metallen, Holz, Stoffen usw. usf. Beifänger sollen in Bewegung, Aussehen also in sensorischen Reizen eine natürliche Beute imitieren. Beifänger sind überwiegend mit Einzelhaken ausgestattet. Auch Mehrfachhaken (Zwillingshaken, Drillingshaken) werden angewendet.

Einer der gebräuchlichsten Beifänger ist der Gummiwurm, der auch Gummi-Makk genannt wird. Diese Beifänger weisen üblicherweise einen Gummischlauch auf, der über einen Haken gezogen ist. Hierbei ist der Haken in der Regel mit einem langen Schenkel gebildet, welcher einen Knick aufweist. An einer Hakenöse ist ein Wirbel befestigt, mittels dessen der Beifänger beispielsweise an einer Leine befestigt ist. Bei schnellen Auf- und Abbewegungen flattern oder rotieren die herkömmlichen Beifänger im Wasser, um einen Fisch anzulocken.

Bei den bekannten Beifängern kommt es häufig zu Fehlattacken durch den Fisch. Ein weiterer Nachteil ist, dass ein Fisch, der bereits angebissen hat, wieder verloren geht.

### Zusammenfassung der Erfindung

Aufgabe der Erfindung ist es, einen künstlichen Zusatzangelköder, der aus Beifänger ausgeführt ist, mit verbesserten Nutzungseigenschaften für den Fischfang anzugeben. Insbesondere soll die Fangquote im Vergleich zu herkömmlichen Zusatzködern erhöht werden.

Diese Aufgabe wird erfindungsgemäß durch einen künstlichen Zusatzangelköder nach dem unabhängigen Anspruch 1 gelöst. Vorteilhafte Ausgestaltungen der Erfindung sind Gegenstand von abhängigen Unteransprüchen.

Die Erfindung umfasst den Gedanken eines künstlichen Zusatzangelköders, der als Beifänger ausgeführt ist, mit Haken, einem Trägerelement aus einem flexiblen Material und einer Befestigungseinrichtung, welche mit dem Trägerelement in einer zugfesten Verbindung steht, wobei die Haken an dem Trägerelement in Längsrichtung zueinander versetzt angeordnet und befestigt sind.

Die Haken sind in Längsrichtung des Trägerelementes hintereinander liegend angeordnet. Hierbei kann vorgesehen sein, dass in Längsrichtung des Trägerelementes eine nicht überlappende Anordnung für die Abschnitte der Haken gebildet ist. Hierbei kann ein Abstand zwischen einander gegenüberliegenden Abschnitten der Haken, insbesondere betreffend den Hakenschenkel, vorgesehen sein.

Die Haken können als Einfach-, Doppel- oder Dreifachhaken ausgeführt sein. Es kann vorgesehen sein, dass sämtliche Haken die gleiche Bauform aufweisen, aber auch beliebige Kombinationen der verschiedenen Hakenbauformen können vorgesehen sein.

Die Befestigungseinrichtung ist vorzugsweise mit einer Öse gebildet.

Das Trägerelement ist aufgrund seiner Flexibilität bei Belastung verformbar. Hierdurch ist der Zusatzangelköder in sich beweglich, wodurch Bewegungen durch einen Fluchtreflex des Fisches ausgeglichen werden. Der Fluchtreflex führt beim Fisch nach dem Anbeißen zu unkontrollierten heftigen Bewegungen mit plötzlichen Richtungsänderungen. Hierdurch versucht sich der Fisch von dem Zusatzangelköder zu lösen. Das flexible Trägerelement nimmt die Bewegungen des Fisches auf und ermöglicht eine Bewegung der Haken. Die Gefahr des Verlustes des angebissenen Fisches wird hierdurch verringert.

Ein Beifänger ist ein künstlicher Zusatzangelköder, der zusätzlich zu einem Primärköder eingesetzt wird, beispielsweise einem Pilker. Hierbei sind in einer Ausführungsform der Primärköder an einem Ende einer Leine und der Beifänger an einem Seitenarm der Angelschnur befestigt. Es kann alternativ oder ergänzend vorgesehen sein, mehrere Zusatzangelköder an mehreren Seitenarmen der Schnur zu befestigen. Zusatzangelköder werden beispielsweise als Beißverstärker eingesetzt, die Futterneid erzeugen sollen. Oft beißen die Fische jedoch direkt auf den Zusatzangelköder.

Der Beifänger weist Haken auf, die mehrere Anbeißstellen für den Fisch bilden. Hierdurch werden Fehlattacken des Fisches auf den Zusatzangelköder im Vergleich zu herkömmlichen Beifängern verringert, die nur einen Haken und somit nur eine Anbißstelle aufweisen. Des Weiteren besteht die Möglichkeit, dass der Fisch gleichzeitig auf mehrere Haken des vorgeschlagenen Zusatzangelköders beißt. In diesem Fall wird der Fisch durch die mehreren Haken fester gehalten, als es bei einem herkömmlichen Beifänger möglich wäre. Fischverluste werden hierdurch deutlich verringert.

Größe und Form des Zusatzangelköders können an einen Zielfisch angepasst werden. Der Zusatzangelköder kommt beispielsweise zum Einsatz, wenn das Beuteschema des Zielfisches nur kleine Größen umfasst. Es kann vorgesehen sein, dass der Beifänger fischähnlich gebildet ist. Alternativ kann vorgesehen sein, mit der Form des Zusatzangelköders andere Beutetiere zu imitieren, beispielsweise Garnelen oder Seenadeln. Eine Anpassung der Form des Zusatzangelköders kann beispielsweise durch eine geeignete Wahl für die Form des Schlauchelements vorgenommen werden. Darüber hinaus besteht die Möglichkeit optische, akustische, geschmackliche oder geruchsintensive Zusätze am Beifänger anzubringen.

Eine bevorzugte Weiterbildung der Erfindung sieht vor, dass das Trägerelement abschnittsweise oder vollständig aus einem mehradrigen Drahtmaterial gebildet ist. Die Adern des Drahtmaterials können miteinander verdrillt sein. Vorzugsweise kommt ein Stahldraht zur Anwendung. Aber auch andere Metallmaterialien können verwendet werden. Das Drahtmaterial weist verschiedene positive Eigenschaften auf. Es ist sehr fest, so dass ein Reißen verhindert wird. Gleichzeitig ist das Drahtmaterial flexibel, wodurch die Bewegungen eines am Zusatzangelköder angebissenen Fisches ausgeglichen werden.

Bei einer zweckmäßigen Ausgestaltung der Erfindung kann vorgesehen sein, dass das Trägerelement mit mehreren Seilsträngen gebildet ist. Die mehreren Seilstränge können miteinander verdrillt sein. Die Seilstränge ihrerseits können in einer Ausführungsform jeweils aus mehradrigem Drahtmaterial bestehen. Dieses kann für einzelne oder alle der Seilstränge gelten.

Eine vorteilhafte Ausführungsform der Erfindung sieht vor, dass das Trägerelement durch eine Hakenöse eines oder mehrerer Haken geführt ist. Alternativ oder ergänzend kann vorgesehen sein, dass das Trägerelement einen oder mehrere der Hakenschenkel umgreift, beispielsweise mittels einer Trägerelementschlaufe.

Bevorzugt sieht eine Fortbildung der Erfindung vor, dass ein jeweiliger Hakenschenkel der Haken im Wesentlichen längs des Trägerelementes angeordnet ist.

Bei einer vorteilhaften Ausgestaltung der Erfindung kann vorgesehen sein, dass die Befestigungseinrichtung an ein Wirbelelement koppelt. Das Wirbelelement ermöglicht eine einfache Befestigung des Zusatzangelköders an dem Seitenarm der Leine, wobei der Zusatzangelköder eine hohe Beweglichkeit aufweist.

Eine Weiterbildung der Erfindung kann vorsehen, dass der Hakenschenkel der Haken weniger als dreimal so lang, bevorzugt weniger als zweimal so lang ist wie der Abstand zwischen einer Hakenspitze und dem Scheitelpunkt einer Hakenkrümmung. Hierdurch werden Verluste bereits angehakter Fische vermieden. Bei herkömmlichen Beifängern ist ein Schenkel eines Beifängerhakens mehr als dreimal so lang wie der Abstand zwischen einer Spitze und dem Scheitelpunkt einer Krümmung des Beifängerhakens. Bei den herkömmlichen langschenkligen Beifängern sind somit wirkende Hebelkräfte sehr groß. Die Fluchtbewegungen des eingehakten Fisches führen zu einem starken Zug auf die Schnur. Hierdurch wird der herkömmliche Beifängerhaken ausgehebelt und der Fisch geht verloren.

Eine bevorzugte Weiterbildung der Erfindung sieht vor, dass das Trägerelement wenigstens abschnittsweise in einem Schlauchelement aufgenommen ist und den jeweiligen Hakenschenkel der mehreren Haken zumindest abschnittsweise umgreift. In einer Ausführungsform kann vorgesehen sein, dass die in Längsrichtung des Trägerelementes angeordneten Haken mit Hilfe des Schlauchelementes entlang einer gekrümmten Linie angeordnet sind. Das Schlauchelement führt hierbei also zu einer Krümmung des Trägerelementes. Auf diese Weise wird bei der Nutzung des Beifängers im Wasser eine Drehung desselben induziert, wenn der Beifänger im Wasser gezogen wird. Eine vorteilhafte Ausführungsform der Erfindung sieht vor, dass das Schlauchelement länger ist als eine Gesamtlänge der Hakenschenkel der Haken. Ein Ende des Schlauchelements, das über die Hakenschenkel der Haken hinausragt, führt Bewegungen im Wasser aus und erhöht somit den Lockreiz des Zusatzangelköders.

Bei einer zweckmäßigen Ausgestaltung der Erfindung kann vorgesehen sein, dass das Schlauchelement länger ist als eine Gesamtlänge des jeweiligen Hakenschenkels ist.

Eine vorteilhafte Ausführungsform der Erfindung sieht vor, dass ein distales Ende des Schlauchelementes abgeschrägt ist.

Bevorzugt sieht eine Fortbildung der Erfindung vor, dass Hakenspitzen der Haken auf entgegen gesetzten Seiten des Schlauchelementes austreten. Wenn mehr als zwei Haken zueinander versetzt an dem Trägerelement angeordnet sind, kann in einer Ausgestaltung vorgesehen sein, dass die Hakenspitzen alternierend zu gegenüberliegenden Seiten aus dem Schlauchelement austreten. Eine solche Anordnung kann auch bei einer Ausführungsform vorgesehen sein, die das Schlauchelement nicht vorsieht.

Es kann vorgesehen sein, dass die Hakenöse an einem Ende des Hakenschenkels des Hakens gebildet ist, indem der Hakenschenkel an dem Ende zur Hakenöse gebogen ist. Alternativ kann vorgesehen sein, dass die Hakenösen als von dem jeweiligen Hakenschenkel der Haken unabhängige Teile gebildet sind, die jeweils an den Hakenschenkeln befestigt sind.

Es kann vorgesehen sein, dass das die Hakenschenkel der Haken nicht in einer Fluchtlinie angeordnet sind. Hierdurch rotiert der Zusatzangelköder in einer Strömung eines Gewässers. Die Rotation verstärkt den Lockreiz des Zusatzangelköders, so dass die Wahrscheinlichkeit für das Anbeißen eines Fisches erhöht wird.

Es kann vorgesehen sein, dass der Haken und das Trägerelement mittels einer versiegelten Wicklung miteinander verbunden sind. Alternative oder ergänzend kann vorgesehen sein, dass der Haken und das Trägerelement mittels einer Schweiß-, einer Kleb-, einer Niet-, einer Aufschrumpf-, und/oder einer Einpressverbindung miteinander verbunden sind.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: eine schematische Darstellung eines künstlichen Zusatzangelköders,
- Fig. 2: eine weitere schematische Darstellung des künstlichen Zusatzangelköders,
- Fig. 3: eine schematische Darstellung eines Hakens, und
- Fig. 4: eine schematische Darstellung einer weiteren Ausführungsform des künstlichen Zusatzangelköders.

Im Folgenden beziehen sich gleiche Bezugszeichen auf gleiche Merkmale.

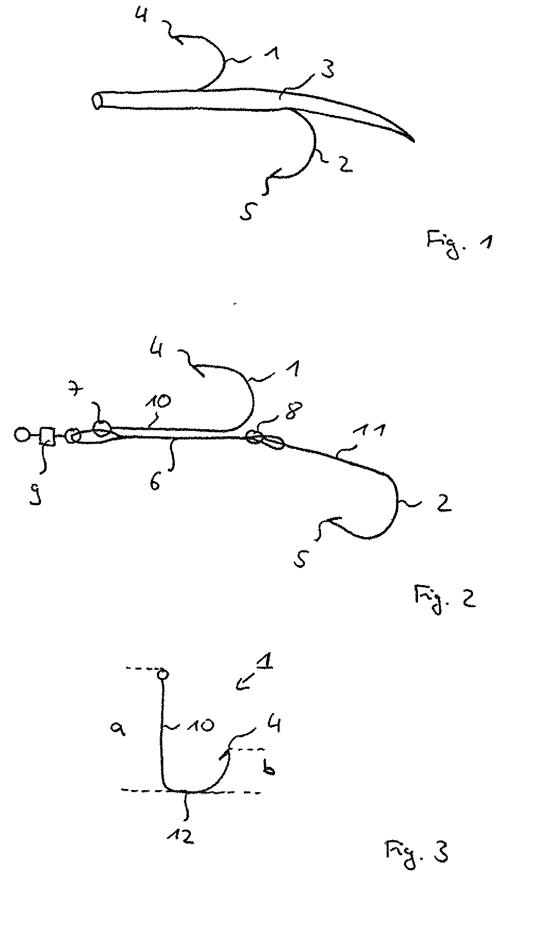

Fig. 1 zeigt eine schematische Darstellung eines künstlichen Zusatzangelköders, der als Beifänger ausgeführt ist. Der Zusatzangelköder weist einen Haken 1, einen weiteren Haken 2 und ein Schlauchelement 3 auf. Das Schlauchelement 3 besteht beispielsweise aus einem Gummi- oder einem Kunststoffmaterial.

Die Haken 1, 2 sind in Längsrichtung des Schlauchelements 3 hintereinander angeordnet. Das Schlauchelement 3 umgreift einen jeweiligen Hakenschenkel der Haken 1, 2. Eine Hakenspitze 4 des Hakens 1 tritt auf einer anderen Seite des Schlauchelements 3 aus als eine Hakenspitze 5 des weiteren Hakens 2. Das Schlauchelement 3 ist länger als eine Gesamtlänge der Hakenschenkel der Haken 1, 2. Ein distales Ende des Schlauchelements 3 ist abgeschrägt.

Fig. 2 zeigt eine weitere schematische Darstellung des künstlichen Zusatzangelköders, wobei das Schlauchelement 3 entfernt ist, um die hiervon umgriffenen Elemente zu zeigen. Die Haken 1, 2 sind mittels eines Träger- oder Befestigungsmittels 6 miteinander verbunden. Das Trägermittel 6 ist bei der dargestellten Ausführungsform mit einer Hakenöse 7, die an dem Haken 1 gebildet ist, und einer weiteren Hakenöse 8 verbunden, die an dem weiteren Haken 2 gebildet ist.

Des Weiteren ist das Träger- oder Befestigungsmittel 6 im Bereich der Hakenöse 7 mit einem Wirbel 9 verbunden. Das Trägermittel 6 ist derart mit dem Haken 1 und dem weiteren Haken 2 verbunden, so dass ein Hakenschenkel 10 des Hakens 1 und ein Hakenschenkel 11 des weiteren Hakens 2 nicht auf einer gemeinsamen Fluchtlinie angeordnet sind. Hierdurch ist der Zusatzangelköder sehr rotationsfreudig im Wasser. Das Trägermittel 6 kann in einer Ausführungsform ein Drahtseil sein, zum Beispiel aus Stahldraht. Hierdurch ist gewährleistet, dass das Trägermittel 6 flexibel ist und gleichzeitig eine genügende Steifigkeit zur Verfügung stellt, um die Haken 1, 2 in Position zu halten. Das Drahtseil kann mehradrig ausgeführt sein und alternativ oder ergänzend mehrere Seilstränge aufweisen.

Fig. 3 zeigt eine schematische Darstellung des Hakens 1. Der Hakenschenkel 10 des Hakens 1 (Länge a) ist weniger als dreimal so lang wie der Abstand zwischen der Hakenspitze 4 und dem Scheitelpunkt 12 einer Hakenkrümmung (Länge b). Hierdurch ist eine Hebelkraft auf den Haken 1 reduziert.

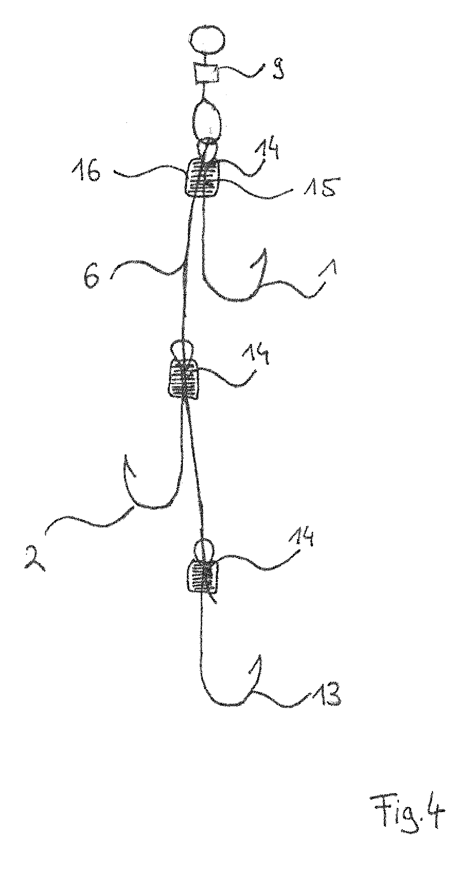

Fig. 4 eine schematische Darstellung einer weiteren Ausführungsform des künstlichen Zusatzangelköders mit drei Haken 1, 2, 13. Die Haken 1, 2, 13 sind mittels eines Träger- oder Befestigungsmittels 6 miteinander verbunden. Das Trägermittel 6 ist bei der dargestellten Ausführungsform mittels einer versiegelten Wicklung 14 mit den Haken 1, 2, 13 verbunden.
Bei der versiegelten Wicklung 14 wird ein Faden 15, zum Beispiel ein. Garn, fest um den jeweiligen Hakenschenkel und das Befestigungsmittel 6 gewickelt. Anschließend wird die Wicklung 14 mit einem Klebstoff 16, wie zum Beispiel einem Zweikomponentenkleber, versiegelt.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Künstlicher Zusatzangelköder, der als Beifänger ausgeführt ist, mit
- Haken (1, 2),
- einem Trägerelement (6) aus einem flexiblen Material und
- einer Befestigungseinrichtung, welches mit dem Trägerelement (6) in einer zugfesten
Verbindung steht,
wobei die Haken (1, 2) an dem Trägerelement (6) in Längsrichtung zueinander versetzt angeordnet und befestigt sind.

2. Zusatzangelköder nach Anspruch 1, **dadurch gekennzeichnet, dass** das Trägerelement (6) abschnittsweise oder vollständig aus einem mehradrigen Drahtmaterial gebildet ist.

3. Zusatzangelköder nach Anspruch 1 oder 2, **dadurch gekennzeichnet, dass** das Trägerelement (6) mit mehreren Seilsträngen gebildet ist.

4. Zusatzangelköder nach mindestens einem der vorangehenden Ansprüche, **dadurch gekennzeichnet, dass** das Trägerelement (6) durch eine Hakenöse (7; 8) eines oder mehrerer Haken (1,2) geführt ist.

5. Zusatzangelköder nach mindestens einem der vorangehenden Ansprüche, dadurch g e - kennzeichnet, dass ein jeweiliger Hakenschenkel (10, 11) der Haken (1, 2) im Wesentlichen längs des Trägerelementes (6) angeordnet ist.

6. Zusatzangelköder nach mindestens einem der vorangehenden Ansprüche, **dadurch gekennzeichnet, dass** die Befestigungseinrichtung an ein Wirbelelement (9) koppelt.

7. Zusatzangelköder nach mindestens einem der vorangehenden Ansprüche, **dadurch gekennzeichnet, dass** der Hakenschenkel (10; 11) der Haken (1, 2) weniger als dreimal so lang, bevorzugt weniger als zweimal so lang ist wie der Abstand zwischen einer Hakenspitze (4; 5) und dem Scheitelpunkt (12) einer Hakenkrümmung.

8. Zusatzangelköder nach mindestens einem der vorangehenden Ansprüche, **dadurch gekennzeichnet, dass** das Trägerelement (6) wenigstens abschnittsweise in einem Schlauchelement (3) aufgenommen ist und den jeweiligen Hakenschenkel (10, 11) der mehreren Haken (1, 2) zumindest abschnittsweise umgreift.

9. Zusatzangelköder nach Anspruch 8, **dadurch gekennzeichnet, dass** das Schlauchelement (3) länger ist als eine Gesamtlänge des jeweiligen Hakenschenkels (10, 11) ist.

10. Zusatzangelköder nach Anspruch 8 oder 9, **dadurch gekennzeichnet, dass** ein distales Ende des Schlauchelementes (3) abgeschrägt ist.

11. Zusatzangelköder nach mindestens einem der vorangehenden Ansprüche, **dadurch gekennzeichnet, dass** Hakenspitzen der Haken (1, 2) auf entgegen gesetzten Seiten des Schlauchelementes (3) austreten.

12. Zusatzangelköder nach mindestens einem der vorangehenden Ansprüche, **dadurch gekennzeichnet, dass** Haken (1, 2) und Trägerelement (6) mittels einer versiegelter Wicklung mit einander verbunden sind.
